# EUROPEAN PATENT SPECIFICATION

(11) **EP 2 392 240 B1**
(45) Date of publication and mention of the grant of the patent: **07.05.2014**
(21) Application number: 11167800.9
(22) Date of filing: 27.05.2011
(51) Int. Cl.: A47J 31/44

(54) **Coffee machine**
Kaffeemaschine
Machine à café

(30) Priority: 03.06.2010 IT MI20100186 U
(43) Date of publication of application: 07.12.2011
(73) Proprietor: De'Longhi Appliances S.r.l., 31100 Treviso (IT)
(72) Inventor: De' Longhi, Giuseppe, 31100 Treviso (IT)
(74) Representative: Rapisardi, Mariacristina

(56) References cited:
- DE-A1- 3 602 665
- DE-A1-102007 040 308
- DE-U1-202009 006 129
- US-A1- 2007 031 558
- US-A1- 2008 178 742

## Description

The present finding relates to a coffee machine of the type having an infusion assembly comprising a dispenser internal inside the machine and a front door which can be opened and supports an external dispenser able to receive the infusion from the internal dispenser.

In a traditional coffee machine of the type in which the external dispenser is supported from the fixed front wall of the coffee machine, it is possible to provide for small flexible tube connecting the internal dispenser with the movable external dispenser in order to create a path of the infusion without jumps up to dispensing it in a cup, in relation to cups having different heights.

In a traditional coffee machine of a different type, in which the external dispenser is instead supported by a front door which can be opened and is traditionally placed under the dashboard, the provision of the small flexible tube is strongly discouraged and cannot be practically realized due to the possible negative interference with other parts of the machine during the handling of the external dispenser and most of all during the opening of the door.

In this last type of coffee machine generally the external dispenser has a fixed funnel protected by a telescopic housing having a bottom collecting pan and a nozzle. The infusion separating from the funnel is subject, at least in the protracted configuration of the housing, to a free fall the entity of which is not negligible, before impacting against the bottom of the housing in order to be then dispensed from the nozzle.

During the free fall the infusion deteriorates its own organoleptic characteristics, as in addition to be cooled, it tends to lose its creamy consistence.

DE 108007040309 and US 2007/031558 disclose a coffee machine according to the preamble of claim 1.

The purpose of the present finding is therefore to eliminate the drawbacks lamented in the known art, by realizing a coffee machine of the type having an infusion assembly comprising a dispenser internal inside the machine and a front door which can be opened and supports an external dispenser able to receive the infusion from said external dispenser, which permits to dispense in a cup an infusion which keeps unchanged the organoleptic characteristics deriving from the infusion process.

The purpose and these and other aims, according to the present finding are reached by realizing a coffee machine in accordance with claim 1.

The external dispenser comprises a protection housing of the funnel means, having one housing part fixed to said door and one housing part movable and operatively supported by said fixed housing part.

Preferably the funnel means comprise a first funnel element and at least one second funnel element placed one on the prolongation of the other.

Preferably said first funnel element is hinged to said door and said second funnel element is hinged to said door and to said movable housing part.

Preferably said movable housing part has a guide pin slideable along a guide slot present in said fixed housing part.

Preferably said guide slot has a mainly vertical extension.

Preferably said guide slot has a curvature radius for determining a slight rotation of said movable housing part when said funnel means move from said first to said second configuration and vice versa.

Preferably said external dispenser has blocking means of said movable housing part when reaching said second configuration of said funnel means.

Preferably said first and second funnel elements are subject to a concordant rotation for moving from sad first to said second configuration and vice versa.

Further characteristics and advantages will become more evident from the detailed description of the coffee machine according to the finding, illustrated in an indicative way in the annexed figures, in which:

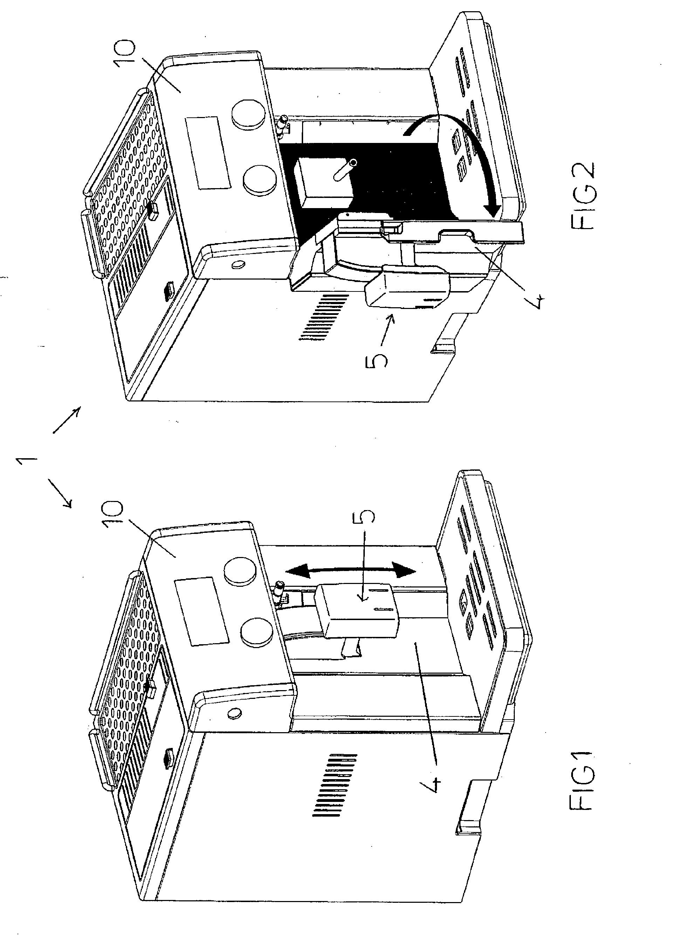

figure 1 shows a perspective view of the coffee machine with the front door closed;
figure 2 shows a perspective view of the coffee machine of figure 1 with the front door open;
figure 3 shows a side elevation view of the coffee machine of figure 1 in the first configuration of the funnel means; and
figure 4 shows a side elevation view of the coffee machine of figure 1 in the second configuration of the funnel means.

With reference to cited figures, a coffee machine is shown globally indicated with the reference character 1.

The coffee machine has an infusion assembly 2 having an internal dispenser 3 inside the machine 1, and frontally underneath the dashboard 10, a door 4 which can be opened and supports an external dispenser 5 able to receive the infusion from the internal dispenser 3.

The external dispenser 5 comprises funnel means 6 for the guided sliding of the infusion towards an end 7 of the funnel means 6 from which the infusion separates for dropping in the underlying cup 8 placed on the cup support 9 of the machine 1. The funnel means 6 are variable between one first configuration having a greater slope for positioning the separation end 7 at a smaller distance from the cup support plane 9 and at least one second configuration having a smaller slope for positioning the separation end 7 at a greater distance from the cup support plane 9. The external dispenser 5 also comprises a protective housing of the funnel means 6, having a part of housing 11 fixed to the door 4 and a part of housing 2 operatively moveable and supported from the fixed part of housing 11.

The funnel means 6 comprise a first funnel element 13 and a second funnel element 14, the one placed on the prolongation of the other.

The first funnel element 13 is hinged with pin 15 to the door 4 and the second funnel element 14 is hinged with pin 16 to the door 4 and with pin 17 to the movable part of housing 12.

The separation end 7 is a part of the second funnel element 14. The movable housing part 12 has a slidable guide pin 19 along a guide slot 18 present in the fixed housing part 11.

The guide slot 18 has a mainly vertical extension, and is in particular shaped with a slight curvature radius for determining a slight rotation of the movable housing part 12 when the funnel means 6 move from the first to the second configuration and viece versa.

The external dispenser 5 further has blocking means (not shown) of the movable housing part 12 when reaching the second configuration of the funnel means 6. The blocking means can be of any kind, for example as friction or magnetic means. The function of the external dispenser 5 is as follows.

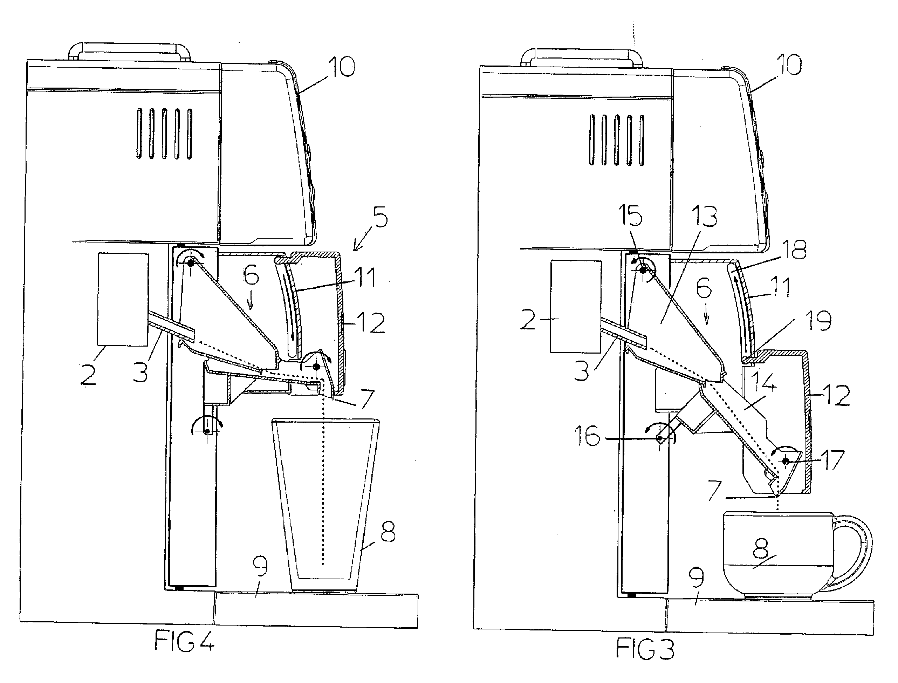

It is assumed that initially the funnel means 6 are in the second configuration, illustrated in figure 4, capable to serve a high cup 8.

The movable housing part 12 is retained in raised position.

The first and second funnel elements 13 and 14 placed the one on the prolongation of the other assure a guiding substantially without jumps or free falls of the internal dispenser 3 proximate to the bottom of the first funnel element 13, to the cup 8 the mouth of which is proximate to the separation end 7 of the second funnel element 14. Also the transit of the infusion from the first funnel element 13 to the second funnel element 14 practically occurs without a relevant jump.

The downwards inclined path of the infusion is evidenced by a dotted line.

When it is necessary to dispense in a low cup 8, the funnel means 6 are moved from the second to the first configuration illustrated in figure 3.

The funnel means 6 are manually activated by exterting a push on the movable housing part 12 which takes in a downward rotation the second funnel element 14 on which due to its own weight the first funnel element 13 rests, which in turn is therefore moved with a downward rotation.

The first and second funnel element 13 and 14 also in the first configuration are placed the one on the prolongation of the other and assure a guiding substantially without jumps or free falls from the internal dispenser 3 proximate to the bottom of the first funnel element 13, to the cup 8 the mouth of which is proximate to the separation end 7 of the second funnel element 14. The separation end 7 in the first configuration has a position sensibly lower than that assumed at the second configuration. Once again also the transit of the infusion from the first funnel element 13 to the second funnel element 14 practically occurs without a significant jump. The downwards inclined path of the infusion is evidenced by a dotted line. The downwards slope of the path is naturally more evidenced with respect to the second configuration.

In order to return the funnel means 6 back to the second configuration, one manually moves upwards the movable part of housing 12 driving in a rotation contrary to the preceding one the second funnel element 14, which in turn drives in a rotation contrary to the preceding one the first funnel element 13 which it contacts.

It has been in practice found how the coffee machine according to the finding can produce a coffee with the desired organoleptic characteristics with a simple and extremely efficient construction of the external dispenser.

In practice all used materials, and also their dimensions, can be of any kind according to the needs and the state of the art.

## Claims

1. A coffee machine (1) of the type having an infusion assembly (2), provided with an internal dispenser (3) inside the machine (1), and a front door (4) which can be opened and supports an external dispenser (5) able to receive the infusion from said internal dispenser (3), the external dispenser (5) comprising funnel means (6) for the guided sliding of the infusion towards an end (7) of said funnel means (6) configured to enable separation of said infusion therefrom for dropping in at least one underlying cup (8), said funnel means (6) being variable between a first configuration having a greater downward slope for positioning said separation end (7) at a smaller distance from the cup support plane (9) and at least one second configuration having a smaller downward slope for positioning said separation end (7) at a greater distance from the cup support plane (9),
said external dispenser (5) comprising a protective housing of said funnel means (6), having a housing part (11) fixed to said door (4) and a housing part (12) operatively movable and supported by said fixed housing part (11),
said funnel means (6) comprising a first funnel element (13) and at least one second funnel element (14) placed the one on the prolongation of the other,
**characterized in that** said first funnel element (13) is hinged to said door (4) and said second funnel element (14) is hinged to said door (4) and to said movable housing part (12).

2. The coffee machine (1) according to claim 1, **characterized in that**, said movable housing part (12) has a guide pin (17) sliding along a guide slot (19) present in said fixed housing part (11).

3. The coffee machine (1) according to the preceding claim, **characterized in that** said guide slot (18) has a mainly vertical extension.

4. The coffee machine (1) according to the preceding claim, **characterized in that** said guide slot (18) has a curvature radius for determining a slight rotation of said movable housing part (12) when said funnel means (6) moves from said first to said second configuration and vice versa.

5. The coffee machine (1) according to any of the preceding claims, **characterized in that** said external dispenser (5) has blocking means of said movable housing part (12) when reacting said second configuration of said funnel means (6).

6. The coffee machine (1) according to any of the preceding claims, **characterized in that** said first and second funnel element (13, 14) are subject to a concordant rotation for moving from said first to said second configuration and vice versa.

## Patentansprüche

1. Kaffeemaschine (1) des Typs aufweisend eine Brühgruppe (2), versehen mit einem internen Ausgießer (3) in der Maschine (1), und eine frontseitige Tür (4), die geöffnet werden kann und einen externen Ausgießer (5) trägt, der in der Lage ist, das Brühgut vom internen Ausgießer (3) aufzunehmen, wobei der externe Ausgießer (5) Trichtermittel (6) für das geführte Gleiten des Brühguts zu einem Ende (7) der Trichtermittel (6) umfasst, ausgelegt, um die Trennung des Brühguts davon zu ermöglichen, damit dieses in mindestens eine darunter befindliche Tasse (8) tropft, wobei die Trichtermittel (6) zwischen einer ersten Konfiguration, aufweisend eine größere Abwärtsneigung zum Positionieren des Trennungsendes (7) in einer geringeren Entfernung von der Tassenauflageebene (9), und mindestens einer zweiten Konfiguration variabel sind, aufweisend eine geringere Abwärtsneigung zum Positionieren des Trennungsendes (7) in einer größeren Entfernung von der Tassenauflageebene (9),
wobei der externe Ausgießer (5) ein Schutzgehäuse der Trichtermittel (6) umfasst, aufweisend einen Gehäuseteil (11), der an der Tür (4) fixiert ist, und einen Gehäuseteil (12), der betriebswirksam bewegbar ist und vom fixierten Gehäuseteil (11) getragen wird,
wobei diese Trichtermittel (6) ein erstes Trichterelement (13) und mindestens ein zweites Trichterelement (14) umfassen, wobei das eine an der Verlängerung des anderen platziert ist,
**dadurch gekennzeichnet, dass** das erste Trichterelement (13) mittels eines Scharniers an der Tür (4) befestigt ist und das zweite Trichterelement (14) mittels eines Scharniers an der Tür (4) und an dem bewegbaren Gehäuseteil (12) befestigt ist.

2. Kaffeemaschine (1) nach Anspruch 1, **dadurch gekennzeichnet, dass** der bewegbare Gehäuseteil (12) einen Führungszapfen (17) aufweist, der entlang einer Führungsnut (19) gleitet, die im fixierten Gehäuseteil (11) vorhanden ist.

3. Kaffeemaschine (1) nach dem vorhergehenden Anspruch, **dadurch gekennzeichnet, dass** die Führungsnut (18) eine hauptsächlich vertikale Ausdehnung aufweist.

4. Kaffeemaschine (1) nach dem vorhergehenden Anspruch, **dadurch gekennzeichnet, dass** die Führungsnut (18) einen Krümmungsradius aufweist, um eine leichte Drehung des bewegbaren Gehäuseteils (12) zu bewirken, wenn sich die Trichtermittel (6) von der ersten zur zweiten bereitgestellten Konfiguration bewegen und umgekehrt.

5. Kaffeemaschine (1) nach einem der vorhergehenden Ansprüche, **dadurch gekennzeichnet, dass** der externe Ausgießer (5) Blockierungsmittel des bewegbaren Gehäuseteils (12) aufweist, wenn er die Trichtermittel (6) erreicht.

6. Kaffeemaschine (1) nach einem der vorhergehenden Ansprüche, **dadurch gekennzeichnet, dass** das erste und das zweite Trichterelement (13, 14) einer übereinstimmenden Rotation ausgesetzt sind, um sich von der ersten zur zweiten Konfiguration zu bewegen und umgekehrt.

## Revendications

1. Machine à café (1), du type ayant un assemblage d'infusion (2), pourvue d'un distributeur interne (3) situé à l'intérieur de la machine (1), et d'une porte frontale (4) pouvant être ouverte et qui supporte un distributeur externe (5) apte à recevoir l'infusion
dudit distributeur interne (3), le distributeur externe (5) comprenant des moyens coniques (6) permettant le glissement guidé de l'infusion vers une extrémité (7) desdits moyens coniques (6) configurés pour permettre la séparation de ladite infusion pour tomber dans au moins une tasse (8) sous-jacente, lesdits moyens coniques (6) étant variables entre une première configuration ayant une plus grande pente descendante pour positionner ladite extrémité de séparation (7) à une distance plus petite du plan de support (9) de la tasse et au moins une seconde configuration ayant une plus petite pente descendante pour positionner ladite extrémité de séparation (7) à une plus grande distance du plan de support (9) de la tasse,
ledit distributeur externe (5) comprenant une enveloppe de protection desdits moyens coniques (6), ayant une partie de logement (11) fixée à ladite porte (4) et une partie de logement (12) fonctionnellement mobile et supportée par ladite partie de logement fixée (11),
lesdits moyens coniques (6) comprenant un premier élément conique (13) et au moins un second élément conique (14) placés dans le prolongement l'un de l'autre,
**caractérisée en ce que** ledit élément conique (13) est monté articulé à ladite porte (4) et ledit second élément conique (14) est monté articulé à ladite porte (4) et à ladite partie de logement mobile (12).

2. Machine à café (1) selon la revendication 1, **caractérisée en ce que** ladite partie de logement mobile (12) possède un goujon de guidage (17) coulissant le long d'une encoche de guidage (19) présente dans ladite partie de logement fixée (11).

3. Machine à café (1) selon la revendication précédente, **caractérisée en ce que** ladite encoche de guidage (18) possède une extension principalement verticale.

4. Machine à café (1) selon la revendication précédente, **caractérisée en ce que** ladite encoche de guidage (18) possède un rayon de courbure permettant de déterminer une légère rotation de ladite partie de logement mobile (12) lorsque lesdits moyens coniques (6) se déplacent de ladite première à ladite seconde configuration obtenue et vice versa.

5. Machine à café (1) selon l'une quelconque des revendications précédentes, **caractérisée en ce que** ledit distributeur externe (5) possède des moyens de blocage de ladite partie de logement mobile (12) lorsqu'elle atteint ladite seconde configuration desdits moyens coniques (6).

6. Machine à café (1) selon l'une quelconque des revendications précédentes, **caractérisée en ce que** lesdits premier et second éléments coniques (13, 14) sont soumis à une rotation concordante pour se déplacer de ladite première à ladite seconde configuration et vice versa.
